# EUROPÄISCHE PATENTANMELDUNG

(11) **EP 0 922 613 A2**
(43) Veröffentlichungstag der Anmeldung: **16.06.1999**
(21) Anmeldenummer: 98121930.6
(22) Anmeldetag: 19.11.1998
(51) Int. Cl.: B60R 7/04

(54) **Fahrzeugtür, insbesondere für Personenkraftwagen, mit Ablagefach**

(30) Priorität: 10.12.1997 DE 19754832
(71) Anmelder: Volkswagen Aktiengesellschaft, 38436 Wolfsburg (DE)
(72) Erfinder: Odysseus, Andronis, 38100 Braunschweig (DE)

(57) **Zusammenfassung**

Die Erfindung betrifft eine Fahrzeugtür, insbesondere für Personenkraftwagen, mit einer Innenverkleidung (1) und einem in die Innenverkleidung (1) eingebrachten Ablagefach (10), welches vom Innenraum des Fahrzeugs zugänglich und mit einer Abdeckung (4) versehen ist. Die Abdeckung (4) ist erfindungsgemäß verschieblich gehalten. Auf diese Weise ist eine erhebliche Platzeinsparung vor allem beim Betätigen der Abdeckung (4) erzielbar, was insbesondere auch Personenkraftwagen der Kompaktklasse mit kleineren Innenraumverhältnissen zugute kommt.

## Beschreibung

Die Erfindung betrifft eine Fahrzeugtür, insbesondere für Personenkraftwagen, mit einer Innenverkleidung und einem in die Innenverkleidung eingebrachten Ablagefach, welches vom Innenraum des Fahrzeugs zugänglich und mit einer Abdeckung versehen ist.

Fahrzeugtüren der oben genannten Art sind aus dem Stand der Technik bekannt. Sie weisen zumeist den Nachteil auf, daß die Abdeckung des Ablagefaches bei Betätigung, insbesondere Öffnung, zusätzlichen Platz vom Fahrzeuginnenraum in Beschlag nimmt.

Der vorliegenden Erfindung liegt daher die Aufgabe zugrunde, eine Fahrzeugtür der oben genannten Art dahingehend zu verbessern, daß die Abdeckung des Ablagefachs beim Betätigen wenig Raum vom Fahrzeuginneren benötigt.

Die Erfindung löst diese Aufgabe durch die Merkmale des Hauptanspruchs. Erfindungsgemäß ist vorgesehen, daß die Abdeckung verschieblich gehalten ist. Auf diese Weise wird beim Betätigen der Abdeckung nahezu kein Raum vom Fahrzeuginneren benötigt, im Gegensatz zu beispielsweise schwenkbaren Abdeckungen, die beim Öffnen in den Fahrzeuginnenraum schwenken.

Eine zweckmäßige Weiterbildung der Erfindung sieht vor, daß die Abdeckung vertikal verschieblich gehalten ist. Dabei entspricht vorteilhafterweise die maximale Schließstellung der Abdeckung ihrer obersten Position und die maximale Öffnungsstellung der Abdeckung ihrer untersten Position. Somit kann durch Verschieben der Abdeckung das Ablagefach sofort zumindest über seine ganze Breite geöffnet und eingesehen werden. Die Gefahr, daß Gegenstände beim Betätigen der Abdeckung unbeabsichtigt aus dem Ablagefach herausfallen wird minimiert.

Die Abdeckung ist in sinnvoller Ausgestaltung des Erfindungsgedankens mittels geeigneter Mittel geführt. Dabei können zweckmäßigerweise die Führungsmittel in die Innenverkleidung eingeformt sein. Somit wird ein sicheres Öffnen und Schließen der Abdeckung gewährleistet und durch Einformen der Führungsmittel kann Teile- und Montageaufwand eingespart werden.

Es ist für eine kompakte Bauweise sehr vorteilhaft, wenn im wesentlichen unterhalb des Ablagefachs in der Innenverkleidung ein schlitzartiger Führungskanal vorgesehen ist, der in etwa u-förmig ausgebildet ist, wobei die Abdeckung aus flexiblem Werkstoff besteht. Dadurch kann trotz großem Ablagefach und großer Abdeckung der Platzbedarf für die Abdeckung in der Innenverkleidung klein gehalten werden. Denn die Abdeckung wird in der Innenverkleidung umgelenkt.

Um jederzeit eine stabile Öffnungsposition der Abdeckung zu erhalten kann zweckmäßigerweise vorgesehen sein, daß die Abdeckung selbsthemmend in den Führungsmitteln geführt oder daß die Abdeckung in unterschiedlichen Positionen rastend in den Führungsmitteln geführt ist.

Bei Vorsehen einer Greifhilfe kann das Betätigen der Abdeckung erleichtert werden. Zudem ist das Einbringen einer Beleuchtungseinrichtung im Ablagefach sehr vorteilhaft, so daß dieses gut ausgeleuchtet wird.

Wenn die Abdeckung zweckmäßigerweise transparent ist, kann das Ablagefach auch ohne Öffnen der Abdeckung eingesehen werden.

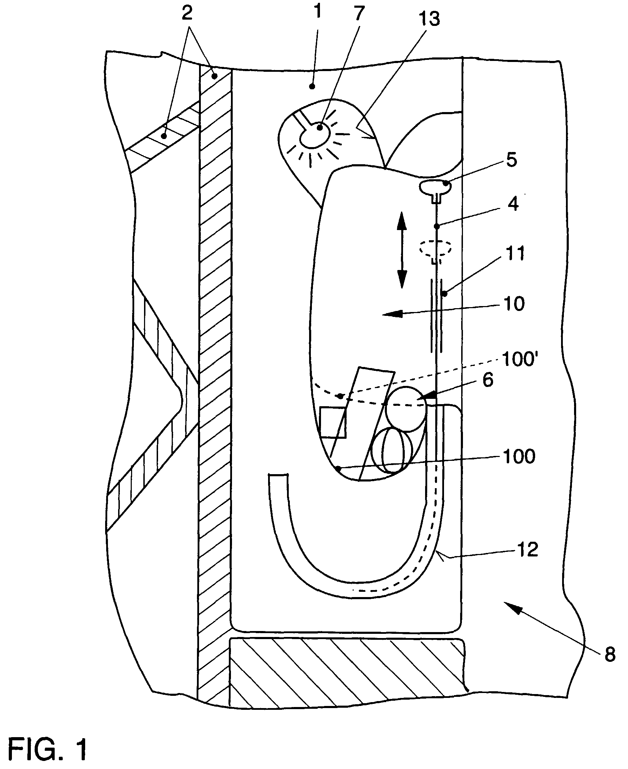

Im folgenden wird ein bevorzugtes Ausführungsbeispiel der Erfindung anhand der beiliegenden Figur näher erläutert. Dabei zeigt
- Figur 1: eine stark vereinfachte Schnittdarstellung durch eine Fahrzeugtür

In Figur 1 ist eine Fahrzeugtür stark vereinfacht und im Schnitt dargestellt, wobei nur die für das Verständnis der Erfindung wesentlichen Elemente gezeigt sind. So ist eine Innenverkleidung 1 der Fahrzeugtür ersichtlich, die in nicht näher dargestellter Weise an einem Innenblech 2 montiert ist. Die Innenverkleidung 1 ist mit einem Ablagefach 10 versehen, welches vom Innenraum 8 des Fahrzeugs zugänglich ist. Das Ablagefach 10 kann in der nicht dargestellten Draufsicht beispielsweise einen in etwa rechteckförmigen Grundriß aufweisen. Des weiteren ist ein muldenartiger Boden 100 vorgesehen, der zur Aufnahme von Gegenständen 6 dient. Durch die muldenartige Bodenform wird den Gegenständen 6 guter Halt gegeben und eine Entnahme kleiner Gegenstände erleichtert. Alternativ ist aber auch eine andere Bodenform (100'), beispielsweise ohne eine Vertiefung denkbar. Wie ferner anhand Fig. 1 deutlich wird, ist das Ablagefach 10 mittels einer im wesentlichen flachen Trennwand 4 abdeckbar. Die Trennwand 4 ist in Richtung ihrer Flächenerstreckung vertikal verschieblich im Öffnungsbereich des Ablagefachs 10 mittels einer angedeuteten Führung 11 geführt, wobei die geschlossene Position der Trennwand 10 dargestellt ist. In dieser Schließposition befindet sich die obere Seite der Trennwand 10 im Bereich der oberen Wand des Ablagefachs 10. Zum Öffnen des Ablagefachs 10 muß die Trennwand 4 vertikal nach unten geschoben werden, wobei die Trennwand 4 in einem schlitzartigen Führungskanal 12 im Bereich der Innenverkleidung 1 im wesentlichen unterhalb des Ablagefachs 10 zusätzlich geführt und aufgenommen wird. Bei voller unterer Öffnungsposition der Trennwand 4 verschwindet die Trennwand 4 vollkommen im Führungskanal 12, der im Querschnitt eine u-förmige Gestalt aufweist. Dadurch kann die Trennwand 4 problemlos im Führungskanal 12 verschoben werden, was natürlich darüber hinaus eine entsprechende Flexibilität der Trennwand 4 voraussetzt.

Durch die verschieblich gehaltene Trennwand 4 kann eine enorme Platzersparnis erzielt werden, da die Trennwand 4 zu keinem Zeitpunkt in den Innenraum 8 des Fahrzeugs gelangt, wie beispielsweise bei schwenkbarer Ausgestaltung der Trennwand 4. Die Platzersparnis wird durch die u-förmige Umlenkung der Trennwand 4 im Führungskanal 12 noch begünstigt, da die Innenverkleidung 1 unterhalb des Ablagefachs 10 kleiner gehalten und das Ablagefach 10 entsprechend größer ausgeführt sein kann.

Für ein leichteres Öffnen und Schließen des Ablagefachs 10 kann die Trennwand 10 an ihrer oberen Kant mit einer Greifhilfe 5, beispielsweise in Form einer Verdickung versehen sein. Die Greifhilfe 5 kann einstückig mit der Trennwand 4 aber auch als separates Teil mit dieser verbunden sein, was dann zum Beispiel mittels einer Rast- oder Steckverbindung erfolgen könnte.

Es sei darauf hingewiesen, daß die Verschieblichkeit der Trennwand 4 natürlich auch horizontal ausgeführt sein kann, wobei auch die Öffnungsposition der Trennwand 4 (linke oder rechte Wand des Ablagefachs 10 bzw. untere oder obere Wand bei vertikaler Verschieblichkeit der Trennwand 4) beliebig wählbar ist. Allerdings weist die gemäß Fig. 1 gezeigte Lösung den Vorteil auf, daß im Ablagefach 10 befindliche Gegenstände 6 beim Öffnen der Trennwand 4 nicht so leicht herausfallen können, da ja die Trennwand von oben nach unten allmählich geöffnet wird. Selbst bei der alternativen Bodenform 100' des Ablagefachs 10 wäre dies zumindest bis kurz vor der vollen unteren Öffnungsposition der Trennwand 4 gewährleistet. Bei beispielsweise halb geöffneter Öffnungsposition der Trennwand 4 dient diese gleichzeitig als Abstützung für größere Gegenstände 6. Die Trennwand 4 muß somit also auch bei im Ablagefach 10 befindlichen Gegenständen 6 nicht unbedingt geschlossen sein.

Die Führung 11 kann bevorzugterweise ähnlich wie der Führungskanal 12 gleich in die Innenverkleidung 1 eingeformt werden, aber auch hier ist eine Ausgestaltung der Führung 11 als separates Teil denkbar. Um eine insbesondere nicht volle Öffnungsposition sicher halten zu können ist vorteilhaft, wenn die Trennwand 4 in den Führungsmitteln 11, 12 selbsthemmend geführt ist. Auch unterschiedliche Rastpositionen könnten mit nicht dargestellten bekannten Rastmitteln verwirklicht werden.

Um vor allem bei Dunkelheit einen besseren Einblick in das Ablagefach 10 zu ermöglichen, kann das Ablagefach 10 mit einer zusätzlichen Aufnahme 13 für eine Beleuchtungseinrichtung 7 versehen sein. Die Aktivierung der Beleuchtungseinrichtung 7 kann über die Bewegung der Trennwand 4 oder separat erfolgen.

Wenn die Trennwand 4 transparent ausgeführt ist, kann der Inhalt des Ablagefachs 10 jederzeit ohne Betätigung der Trennwand 4 eingesehen werden. Bei Dunkelheit kann die Beleuchtungseinrichtung 7 in vorteilhafter Weise somit auch zur Ausleuchtung des Innenraums 8 genutzt werden.

## Patentansprüche

1. Fahrzeugtür, insbesondere für Personenkraftwagen, mit einer Innenverkleidung (1) und einem in die Innenverkleidung (1) eingebrachten Ablagefach (10), welches vom Innenraum des Fahrzeugs zugänglich und mit einer Abdeckung (4) versehen ist, dadurch gekennzeichnet, daß die Abdeckung (4) verschieblich gehalten ist.

2. Fahrzeugtür nach Anspruch 1, dadurch gekennzeichnet, daß die Abdeckung (4) vertikal verschieblich gehalten ist.

3. Fahrzeugtür nach Anspruch 2, dadurch gekennzeichnet, daß die maximale Schließstellung der Abdeckung (4) ihrer obersten Position und die maximale Öfnungsstellung der Abdeckung (4) ihrer untersten Position entspricht.

4. Fahrzeugtür nach einem der Ansprüche 1 - 3, dadurch gekennzeichnet, daß die Abdeckung (4) mittels geeigneter Mittel (11, 12) geführt ist.

5. Fahrzeugtür nach Anspruch 4, dadurch gekennzeichnet, daß die Führungsmittel (11, 12) in die Innenverkleidung (1) eingeformt sind.

6. Fahrzeugtür nach Anspruch 4 oder 5, dadurch gekennzeichnet, daß im wesentlichen unterhalb des Ablagefachs (10) in der Innenverkleidung (1) ein schlitzartiger Führungskanal (12) vorgesehen ist, der in etwa u-förmig ausgebildet ist, wobei die Abdeckung (4) aus flexiblem Werkstoff besteht.

7. Fahrzeugtür nach einem der Ansprüche 4 - 6, dadurch gekennzeichnet, daß die Abdeckung (4) selbsthemmend in den Führungsmitteln (11, 12) geführt ist.

8. Fahrzeugtür nach einem der Ansprüche 4 - 6, dadurch gekennzeichnet, daß die Abdeckung (4) in unterschiedlichen Positionen rastend in den Führungsmitteln (11, 12) geführt ist.

9. Fahrzeugtür nach einem der Ansprüche 1 - 8, dadurch gekennzeichnet, daß die Abdeckung (4) mit einer Greifhilfe (5) versehen ist.

10. Fahrzeugtür nach einem der Ansprüche 1 - 9, dadurch gekennzeichnet, daß das Ablagefach (10) mit einer Beleuchtungseinrichtung (7) versehen ist.

11. Fahrzeugtür nach einem der Ansprüche 1 - 10, dadurch gekennzeichnet, daß die Abdeckung (4) transparent ist.
